# EUROPEAN PATENT APPLICATION

(11) **EP 1 215 745 A1**
(43) Date of publication of application: **19.06.2002**
(21) Application number: 00940876.6
(22) Date of filing: 29.06.2000
(51) Int. Cl.: H01M 10/40, H01M 2/34

(54) **NON-AQUEOUS ELECTROLYTE SECONDARY CELL AND DEVICE USING THE SAME**

(30) Priority: 30.06.1999 JP 18493199
(71) Applicant: MATSUSHITA ELECTRIC INDUSTRIAL CO., LTD., Kadoma-shi, Osaka 571-8501 (JP)
(72) Inventor: WATANABE, Shoichiro, Ikoma-gun, Nara 636-0114 (JP); IWAMOTO, Kazuya, Sakai-shi, Osaka 593-8304 (JP); UEDA, Atsushi, Osaka-shi, Osaka 546-0003 (JP); NUNOME, Jun, Yawata-shi, Kyoto 614-8332 (JP); KOSHINA, Hizuru, Neyagawa-shi, Osaka 572-0019 (JP)
(74) Representative: Patentanwälte Leinweber & Zimmermann
(86) International application number: JP0004291
(87) International publication number: WO0103226

(57) **Abstract**

In a rechargeable non-aqueous electrolyte secondary battery containing positive electrodes, negative electrodes and a non-aqueous solvent, an organic compound having a HOMO energy of -8.5 eV to -11.0 eV and a LUMO energy of -0.135 eV to 3.5 eV which are calculated using PM3 method for Hamiltonian in semiempirical molecular orbital calculation method is added to the non-aqueous solvent. According to the present invention, batteries excellent in safety and long-term reliability and portable information devices are provided.

## Description

### Technical Field

The present invention relates to secondary batteries using non-aqueous electrolytes and devices using the same.

### Background Art

Recently, AV devices and electronic devices such as personal computers of portable or cordless type have been rapidly developed, and secondary batteries which are small in size, light in weight and high in energy density are earnestly demanded as electric sources for driving these devices. Among them, non-aqueous electrolyte batteries using a negative electrode containing lithium as an active material are expected much as batteries having high voltage and high energy density.

In the above batteries, lithium-containing metal oxides which show a voltage on the order of 4 V are used for positive electrode active materials, and materials capable of intercalation or deintercalation of lithium, such as carbonaceous materials, are used for negative electrodes.

One of the most important tasks in these non-aqueous electrolyte batteries is to ensure the safety.

Particularly, in lithium ion secondary batteries, when they are charged in excess of a given charging voltage due to, for example, troubles of charging control circuits, they are in overcharged state, and lithium ions in the positive electrode are excessively extracted and migrate to negative electrode to cause absorption of lithium in an amount larger than the prescribed design capacity in the negative electrode or precipitation of lithium as metallic lithium on the surface of negative electrode. If the batteries are further forcedly charged in such a state, internal resistance of the batteries increases and generation of heat due to the Joule's heat becomes great to cause abnormal heat generation, and, in the worst case, result in thermal runaway. In order to solve these problems, for example, a means for interrupting the charging current upon detecting the change of internal pressure of batteries is generally employed as disclosed in U.S. Patent No.4,943,497.

However, in the case of using such mechanical current interruption mechanism, reduction of cost is difficult and, furthermore, with the batteries becoming smaller and thinner, it becomes structurally difficult to insert the mechanism in the batteries.

For solving the above problems, there is proposed a method of adding to the electrolyte an additive which causes a reversible redox reaction, thereby to self-consume the electric energy introduced into the batteries as a redox shuttle (for example, JP-A-1-206571, JP-A-6-338347, JP-A-7-302614, etc.).

However, in the method of using such redox shuttle, when the overcharging current becomes great, there are limits in charge transfer reaction rate and lithium ion transfer rate, and, thus, it is said that such method is not completely safe.

For solving the above problems, JP-9-50822 and JP-A-10-50342 propose a means of adding an aromatic compound having a methoxy group and a halogen group to batteries which polymerizes at the time of overcharging to result in rising of temperature and, thus, to ensure the safety.

Furthermore, JP-A-9-106835 and JP-A-10-321258 propose methods according to which biphenyl or thiophene is added to the electrolyte, which polymerizes at overcharging to increase voltage of the batteries and internal pressure of the batteries or forms a conductive polymer to produce in the batteries a path through which electrons can move, whereby occurrence of thermal runaway at the time of overcharging is inhibited.

### Disclosure of Invention

As a result of investigation conducted by the inventors on these prior art, it has been found that when the above-mentioned additives are used, safety at overcharging can be improved, but cycle characteristics and storage characteristics which are essential for the batteries in ordinary use are conspicuously deteriorated.

Therefore, the inventors disassembled the deteriorated batteries and observed them, and analyzed the factors for the deterioration of the batteries. As a result, it has become clear that the additives are reduced and decomposed on the surface of the negative electrode, and the decomposition products cover the surface of the negative electrode and deteriorate the discharge characteristics.

The present invention solves the problems and provides excellent batteries which have ensured safety at overcharging with maintaining satisfactorily the cycle characteristics and storage characteristics at usual time which are characteristics essentially required for batteries.

For solving the above problems, according to the present invention, a lithium-containing composite oxide is used as a positive electrode active material, a material capable of absorbing and releasing lithium is used as negative electrode, and a non-aqueous electrolyte containing a non-aqueous solvent is used, and, besides, an organic compound having a HOMO energy (highest occupied molecular orbital energy) of -8.5 eV to -11.0 eV and a LUMO energy (lowest unoccupied molecular orbital energy) of -0.135 eV to 3.5 eV which are calculated using PM3 method for Hamiltonian in semiempirical molecular orbital calculation method is added as an additive to the non-aqueous electrolyte.

Amount of the additive is preferably in the range of 0.1-20% by weight based on the total of the non-aqueous solvent and the additive.

### Brief Description of Drawings

FIG. 1 is a longitudinal sectional view of a cylindrical battery in the examples of the present invention and the comparative examples.
FIG. 2 is a graph which shows voltage temperature behavior of the comparative battery at overcharging.
FIG. 3 is a graph which shows voltage temperature behavior of the battery in the examples of the present invention at overcharging.

### Best Mode for Carrying Out the Invention

As mentioned above, according to the present invention, a lithium-containing composite oxide is used as a positive electrode active material, a material capable of absorbing and releasing lithium is used as negative electrode, and a non-aqueous electrolyte containing a non-aqueous solvent is used, and, besides, an organic compound having a HOMO energy (highest occupied molecular orbital energy) of -8.5 eV to -11.0 eV and a LUMO energy (lowest unoccupied molecular orbital energy) of -0.135 eV to 3.5 eV which are calculated using PM3 method for Hamiltonian in semiempirical molecular orbital calculation method is added as an additive to the non-aqueous electrolyte.

The organic compound added must be chemically stable in the region of potential of positive electrode at which the batteries are usually worked (3.0 - 4.3 V in the case of using LiCoO₂ for positive electrode and a carbonaceous material for negative electrode), and, further, must be rapidly oxidized and polymerized in the overcharging region, namely, must have a proper electrochemical oxidizability.

The inventors have attempted to make an evaluation on the proper electrochemical oxidizability using an orbital energy level (HOMO energy (highest occupied molecular orbital energy)) of occupying electrons which can be most easily removed. As well known to one skilled in the art, HOMO energy can be calculated using PM3 method for Hamiltonian in semiempirical molecular orbital calculation method. (At present, it can be easily calculated by a computer using MOPAC. See, for example, JP-A-6-333576.)

As a result of investigation conducted on the relation between electrochemical oxidizability of the organic compound added and HOMO energy, it has been found that when the HOMO energy is -8.5 eV to -11.0 eV, the compound is stable in the region of potential where batteries are ordinarily used and is efficiently oxidative electrolyzed and polymerized at overcharging. Therefore, it is desired that the organic compound used as the additive in the present invention has a HOMO energy of -8.5 eV to -11.0 eV.

In addition, it is necessary that being different from the additives of the prior art, the organic compound added in the present invention is stable in the region of potential of negative electrode at which the battery is normally used for satisfactorily maintaining cycle characteristics or storage characteristics (0 V - 1.5 V on the basis of Li metal electrode). The inventors have attempted to evaluate this stability based on reduction resistance.

It is known that reduction resistance of an organic compound has a correlation with LUMO energy (lowest unoccupied molecular orbital energy) of molecular orbit. (For example, JP-A-5-290882 specifies the reduction resistance of non-aqueous electrolyte by LUMO energy. However, this patent publication makes no mention of reduction resistance of additives.)

That is, the higher the LUMO energy of the added organic compound is, the lower the reduction potential is, namely, the organic compound is difficult to reduce. Like the HOMO energy, the LUMO energy can also be calculated using PM3 method for Hamiltonian in semiempirical molecular orbital calculation method.

As a result of investigation conducted on the relation between reduction resistance and LUMO energy of the organic compound added, it has been found that when, for example, carbonaceous materials, Sn compounds, Si compounds or the like are used as negative electrode, it has been found that at least the LUMO energy (lowest unoccupied molecular orbital energy) is preferably -0.135 eV to 3.5 eV, especially preferably 0.3 eV to 3.5 eV.

According to the present invention, an organic compound having the specific HOMO energy and LUMO energy as mentioned above is added to the electrolyte. Electrolytic polymerization of the organic compound begins on the active material of positive electrode when the battery reaches the overcharging region. Due to this reaction, the reaction efficiency of lithium ion being extracted from positive electrode extremely lowers and thus deterioration of thermal stability of active material of positive electrode can be inhibited.

Furthermore, since a polymer produced by the polymerization is formed on the surface of positive electrode, it hinders the charge transfer reaction of the positive electrode active material, can extremely increase the internal resistance of battery, and can stop the current from an electric source. In this way, stability at overcharging can be ensured. Moreover, since this organic compound is high in reduction resistance, at an ordinary time, covering of negative electrode with a decomposition product of the organic compound is inhibited and cycle characteristics and storage stability are maintained satisfactorily.

As such additives of the present invention, it has been found that oxidative electrolysis polymerization of aromatic compounds or compounds having a vinyl group easily takes place, and these compounds are high in transformation efficiency and the oxidative electrolysis polymerization proceeds effectively.

Specifically, as the additives of the present invention, mention may be made of aromatic compounds represented by the following formula (1) and having a HOMO energy (highest occupied molecular orbital energy) of -8.5 eV to -11.0 eV and a LUMO energy (lowest unoccupied molecular orbital energy) of -0.135 eV to 3.5 eV. 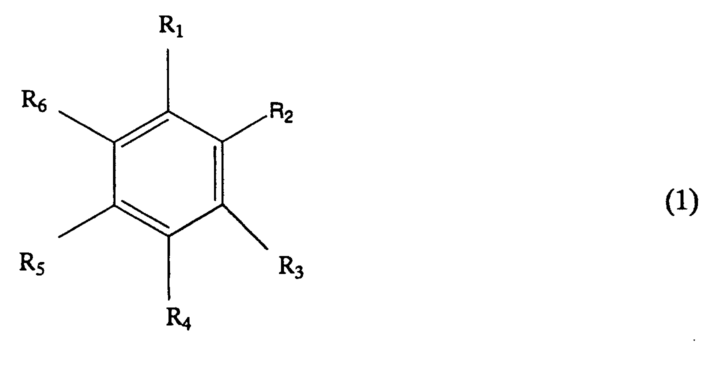 (in the formula, R1-R6 independently of one another are groups selected from the group consisting of hydrogen atom, alkyl group, aryl group and amino group, with a proviso that the number of the hydrogen atom is not more than 5, and the adjacent 2 alkyl groups may form a 5-memberd or 6-membered ring).

In the above formula (1), the alkyl group is a straight chain or branched chain alkyl group or a straight chain or branched chain cycloalkyl group, and it may be a saturated group or an unsaturated group such as an alkenyl-substituted alkyl. It may be unsubstituted or substituted with a halogen atom such as fluorine atom or chlorine atom, an alkoxy group such as methoxy group or ethoxy group, an aryl group such as phenyl group, or the like. The cycloalkyl group may contain in the ring a hetero-atom selected from S, N, O and P, preferably N.

The alkyl group is preferably a lower alkyl group, and the lower alkyl group means a straight chain or branched chain alkyl group of 1-10 carbon atoms or a straight chain or branched chain cycloalkyl group of 3-10 carbon atoms.

The lower alkyl group is preferably cyclopentyl group, cyclohexyl group, vinyl group, allyl group, or the like, and as a preferred cycloalkyl group containing a hetero-atom in the ring, mention may be made of piperazinyl group, piperidyl group, or the like.

The aryl group means a group containing one or more aromatic rings. The aromatic rings may be heterocyclic rings containing a hetero-atom selected from S, N, O and P, and, furthermore, may be pseudoaromatic rings. The term "pseudoaromatic" means a group which is not aromatic in an accurate sense, but behaves in the same manner as an aromatic ring due to unlocalization of electrons, such as furan, thiophene and pyrrole. Furthermore, the aryl group may be substituted with a halogen atom such as fluorine atom or chlorine atom, an alkyl group such as methyl group or ethyl group, an alkoxy group such as methoxy group or ethoxy group, or the like.

Examples of the aromatic ring are benzene, biphenyl, naphthalene, 1-benzylnaphthalene, anthracene, dihydroanthracene, pyridine, 4-phenylpyridine, 3-phenylpyridine, thiophene, benzothiophene, furan, pyran, isobenzofuran, chromene, pyrrole, imidazole, pyrazole, pyrimidine, indole, indolizine, isoindole, quinoline, isoquinoline, quinoxaline, carbazole, and the like.

The aryl group is preferably a substituted or unsubstituted phenyl group, more preferably an unsubstituted group.

The amino group may be substituted with a halogen atom such as fluorine atom or chlorine atom, a lower alkyl group such as methyl group or ethyl group, an alkoxy group such as methoxy group or ethoxy group, an aryl group such as phenyl group, or the like.

The ring formed by the adjacent two alkyl groups is preferably a 6-membered ring, and the number of the rings is preferably 1-3.

Examples of the aromatic compounds represented by the formula (1) are hexaphenylbenzene, phenylcyclohexane, 1,3,5-triphenylbenzene, p-terphenyl, dodecahydrophenylene, 1-phenylpiperazine, divinylbenzene, dicyclohexylbenzene, and the like.

As other additives, mention may be made of unsaturated compounds represented by the following formula (2) and having a HOMO energy (highest occupied molecular orbital energy) of -8.5 eV to -11.0 eV and a LUMO energy (lowest unoccupied molecular orbital energy) of -0.135 eV to 3.5 eV. 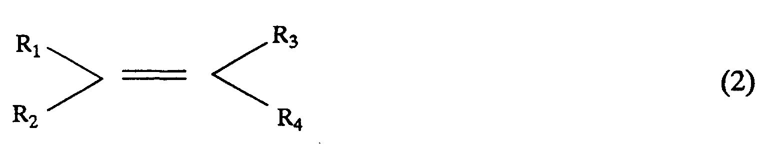 (in the above formula, R1-R4 independently of one another are hydrogen atom, alkyl group, alkoxy group, aryl group or oxycarbonyl group represented by R5OCO-, and the adjacent two alkyl groups of R1 and R2; R3 and R4 may form a 5-membered or 6-membered ring).

In the above formula (2), the alkyl group is a straight chain or branched chain alkyl group or a straight chain or branched chain cycloalkyl group, and it may be a saturated group or an unsaturated group. It may be substituted with a halogen atom such as fluorine atom or chlorine atom, an alkoxy group such as methoxy group or ethoxy group, an aryl group such as phenyl group, or the like. The cycloalkyl group may contain in the ring a hetero-atom selected from S, N, O and P.

The alkyl group is preferably a lower alkyl group, and the lower alkyl group here means a straight chain or branched chain alkyl group of 1-10 carbon atoms or a straight chain or branched chain cycloalkyl group of 3-10 carbon atoms.

The lower alkyl group is preferably cyclopentyl group, cyclohexyl group, vinyl group, allyl group, methyl group, ethyl group, t-butyl group, or the like.

The alkoxy group is a straight chain or branched chain alkoxy group or a straight chain or branched chain cycloalkoxy group, and it may be a saturated group or an unsaturated group. It may be substituted with a halogen atom such as fluorine atom or chlorine atom, an aryl group such as phenyl group, or the like, and may contain an unsaturated bond. The alkoxy group is preferably a lower alkoxy group, and the lower alkoxy group here means a straight chain or branched chain alkoxy group of 1-10 carbon atoms or a straight chain or branched chain cycloalkoxy group of 3-10 carbon atoms. Preferred lower alkoxy group is a branched unsubstituted alkoxy group containing an unsaturated bond.

The aryl group means a group containing one or more aromatic rings or composed of one or more aromatic rings. The aromatic rings may be heterocyclic rings containing a hetero-atom selected from S, N, O and P, and, furthermore, may be pseudoaromatic rings. The term "pseudoaromatic" means a group which is not aromatic in an accurate sense, but behaves in the same manner as an aromatic ring due to unlocalization of electrons, such as furan, thiophene and pyrrole. Furthermore, the aryl group may be substituted with a halogen atom such as fluorine atom or chlorine atom, a lower alkyl group such as methyl group or ethyl group, an alkoxy group such as methoxy group or ethoxy group, or the like.

Examples of the aromatic rings are benzene, biphenyl, naphthalene, 1-benzylnaphthalene, anthracene, dihydroanthracene, pyridine, 4-phenylpyridine, 3-phenylpyridine, thiophene, benzothiophene, furan, pyran, isobenzofuran, chromene, pyrrole, imidazole, pyrazole, pyrimidine, indole, indolizine, isoindole, quinoline, isoquinoline, quinoxaline, carbazole, and the like.

The aryl group is preferably a substituted or unsubstituted phenyl group, more preferably an unsubstituted phenyl group.

R5 of the oxycarbonyl group represented by R5OCO- is an alkyl group or an aryl group, and preferable alkyl groups or aryl groups are as mentioned with reference to the formula (2), and, among them, methyl group and ethyl group are preferred.

Examples of the unsaturated compounds of the formula (2) are vinylcyclohexane, t-butylvinyl ether, methyl methacrylate monomer, cis-stilbene, methylenecyclohexane, tetraphenylethylene, and 2,3-dimethyl-1,3-butadiene.

Furthermore, the additives may be tertiary amines represented by the following formula (3) and having a HOMO energy (highest occupied molecular orbital energy) of -8.5 eV to -11.0 eV and a LUMO energy (lowest unoccupied molecular orbital energy) of -0.135 eV to 3.5 eV. 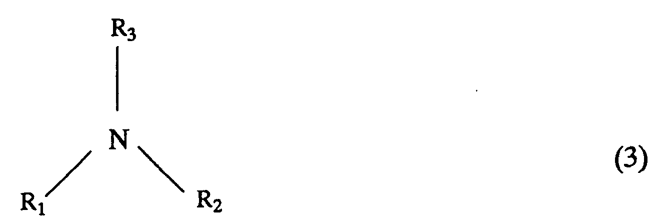 (in the above formula, R1-R3 independently of one another are alkyl group or aryl group).

In the above formula (3), the alkyl group is a straight chain or branched chain alkyl group or a straight chain or branched chain cycloalkyl group, and it may be a saturated group or an unsaturated group. It may be unsubstituted or substituted with a halogen atom such as fluorine atom or chlorine atom, an alkoxy group such as methoxy group or ethoxy group, an aryl group such as phenyl group, or the like. The cycloalkyl group may contain in the ring a hetero-atom selected from S, N, O and P, preferably N.

The alkyl group is preferably a lower alkyl group, and the lower alkyl group means a straight chain or branched chain alkyl group of 1-10 carbon atoms or a straight chain or branched chain cycloalkyl group of 3-10 carbon atoms.

As preferable lower alkyl groups, mention may be made of lower alkyl groups substituted with phenyl group, such as benzyl group.

The aryl group means a group containing one or more aromatic rings. The aromatic rings may be heterocyclic rings containing a hetero-atom selected from S, N, O and P, and, furthermore, may be pseudoaromatic rings. The term "pseudoaromatic" means a group which is not aromatic in an accurate sense, but behaves in the same manner as an aromatic ring due to unlocalization of electrons, such as furan, thiophene or pyrrole. Furthermore, the aryl group may be substituted with a halogen atom such as fluorine atom or chlorine atom, an alkyl group such as methyl group or ethyl group, an alkoxy group such as methoxy group or ethoxy group, or the like.

Examples of the aromatic rings are benzene, biphenyl, naphthalene, 1-benzylnaphthalene, anthracene, dihydroanthracene, pyridine, 4-phenylpyridine, 3-phenylpyridine, thiophene, benzothiophene, furan, pyran, isobenzofuran, chromene, pyrrole, imidazole, pyrazole, pyrimidine, indole, indolizine, isoindole, quinoline, isoquinoline, quinoxaline, carbazole, and the like.

The aryl group is preferably a substituted or unsubstituted phenyl group or naphthyl group, more preferably an unsubstituted group.

Examples of the compounds of the formula (3) are tribenzylamine and N-phenyldibenzylamine.

Moreover, the additives may be unsaturated chain organic compounds which contain 1-10, preferably 3-7 double bonds and in which the carbon number of the straight chain portion is 10-30, and which have a HOMO energy (highest occupied molecular orbital energy) of-8.5 eV to -11.0 eV and a LUMO energy (lowest unoccupied molecular orbital energy) of -0.135 eV to 3.5 eV.

Examples of these additives are squalene and (E)-β-farnesene.

As other additives, mention may be made of tris (4-methoxyphenyl)phosphine, (1R)-(+)-α-pinene, dicyclopentadiene, di(ethylene glycol)divinyl ether, 9,10-dihydroanthracene, triptycene, [2,2]-p-cyclophane, and the like.

Furthermore, the present invention more effectively functions in non-aqueous electrolyte batteries in which the positive electrode and the negative electrode are opposed to each other with interposing therebetween an insulating microporous polyolefin film capable of being impregnated with electrolyte and holding it or an electrolyte essentially consisting of an electrolyte and a polymer, at least a part of which is gelled.

For example, in a battery using a microporous polyolefin film as a separator, it becomes possible to stop overcharging current by the development of shutdown mechanism of the separator caused by heat melting thereof.

In this case, owing to the addition of the additives, the reaction efficiency of lithium ion being extracted from positive electrode markedly decreases and the battery temperature rises in such a state that heat stability of the positive electrode active material is maintained, and, hence, the battery does not cause abnormal heat generation and the battery temperature gradually lowers at the point of time when the current is stopped. Thus, safety can be ensured.

Moreover, reliability can be enhanced by combining with a charging control system of the non-aqueous electrolyte battery which has a function to break a circuit of charging upon sensing the rising of battery temperature.

For breaking the charging circuit with detecting the rising of battery temperature, use of a positive temperature coefficient thermistor (PTC) or a temperature fuse is preferred, and the highest reliability can be obtained when the working temperature of these positive temperature coefficient thermistor and temperature fuse is in the range of 60-120°C.

Devices superior in long-term life and high in reliability and safety can be realized by mounting thereon the above non-aqueous electrolyte batteries and control systems for charging the non-aqueous electrolyte batteries.

Since the additives used in the present invention are not for redox shuttles, the oxidation reaction is preferably irreversible, and they differ in the purpose from those of JP-A-7-362614 and JP-A-9-50822 which aim at reversibility of redox reaction.

Other constitutive elements of the present invention will be explained in detail below.

More preferred lithium-containing composite oxides used as positive electrode active materials in the present invention include LiₓCoO₂, LiₓNiO₂ (U.S. Patent No.4,302,518), LiₓMnO₂, LiₓCo_{y}Ni_{1-y}O₂ (JP-A-63-299056), LiₓCo_{f}V_{1-f}O_{z}, LiₓNi_{1-y}M_{y}O₂ (M = Ti, V, Mn, Fe), LiₓCoₐNi_{b}M_{c}O₂ (M = Ti, Mn, Al, Mg, Fe, Zr), LiₓMn₂O₄, LiₓMn_{2-y}M_{y}O₄ (M = Na, Mg, Sc, Y, Fe, Co, Ni, Ti, Zr, Cu, Zn, Al, Pb, Sb) (x=0-1.2, y=0-0.9, f=0.9-0.98, z=2.0-2.3, a+b+c=1, 0≦a≦1, 0≦b≦1, 0≦c≦1). The value x is a value before starting of charging and discharging, which increases or decreases by charging and discharging.

The lithium-containing composite oxides used as positive electrode active materials in the present invention can be prepared by mixing carbonate, nitrate, oxide or hydroxide of lithium with carbonate, nitrate, oxide or hydroxide of a transition metal such as cobalt, manganese or nickel at a desired composition, grinding the mixture and firing the powder or by a solution reaction. The firing method is especially preferred, and the firing temperature can be 250-1500°C at which a part of the mixed compound is decomposed and molten. The firing time is preferably 1-80 hours. The firing gas atmosphere can be any of air atmosphere, oxidizing atmosphere or reducing atmosphere, and has no special limitation.

In the present invention, a plurality of different positive electrode active materials may be used in combination. For example, those which are opposite in behavior of expansion and contraction at the time of charging and discharging can be used. Preferred examples of positive electrode active materials which expand at the time of discharging (at the time of intercalation of lithium ion) and contract at the time of charging (at the time of deintercalation of lithium ion) are spinel type lithium-containing manganese oxides, and preferred examples of positive electrode active materials which contract at the time of discharging (at the time of intercalation of lithium ion) and expand at the time of charging (at the time of deintercalation of lithium ion) are lithium-containing cobalt oxides. Preferred structural formula of the spinel type lithium-containing manganese oxides is Li₁₋ ₓMn₂O₄ (0≦X≦1) and preferred examples of the lithium-containing cobalt oxides are Li₁₋ₓCoO₂ (0≦x≦1).

Conducting agents in the positive electrode active materials of the present invention can be any electron conductive materials as far as they do not undergo chemical changes in the constructed batteries. For example, there may be used graphite such as natural graphite (flake graphite, etc.) and artificial graphite, carbon blacks such as acetylene black, ketjen black, channel black, furnace black, lamp black and thermal black, conductive fibers such as carbon fibers and metal fibers, metal powders such as carbon fluoride, copper, nickel, aluminum and silver, conductive whiskers such as zinc oxide and potassium titanate, conductive metal oxides such as titanium oxide, and organic conductive materials such as polyphenylene derivatives. These can be contained each alone or in admixture. Of these conducting agents, especially preferred are artificial graphite, acetylene black and nickel powders. Amount of the conducting agents is not especially limited, but is preferably 1-50% by weight, especially preferably 1-30% by weight. In the case of carbon or graphite, 2-15% by weight is especially preferred.

Preferred binders in the positive electrode mix in the present invention are polymers having a decomposition temperature of not lower than 300°C. Examples of the binders are polyethylene, polypropylene, polytetrafluoroethylene (PTFE), polyvinylidene fluoride (PVDF), tetrafluoroethylene-hexafluoroethylene copolymer, tetrafluoroethylene-hexafluoropropylene copolymer (FEP), tetrafluoroethylene-perfluoroalkylvinyl ether copolymer (PFA), vinylidene fluoride-hexafluoropropylene copolymer, vinylidene fluoride-chlorotrifluoroethylene copolymer, ethylene-tetrafluoroethylene copolymer (ETFE resin), polychlorotrifluoroethylene (PCTFE), vinylidene fluoride-pentafluoropropylene copolymer, propylenetetrafluoroethylene copolymer, ethylenechlorotrifluoroethylene copolymer (ECTFE), vinylidene fluoride-hexafluoropropylene-tetrafluoroethylene copolymer, and vinylidene fluoride-perfluoromethylvinyl ether-tetrafluoroethylene copolymer. Of these binders, the most preferred are polyvinylidene fluoride (PVDF) and polytetrafluoroethylene (PTFE).

As current collectors of positive electrodes, there may be used any electron conductors as far as they do not undergo chemical changes in the constructed batteries. For examples, as materials of the collectors, there may be used stainless steel, nickel, aluminum, titanium and carbon, and, besides, aluminum or stainless steel the surface of which is treated with carbon, nickel, titanium or silver. Aluminum or aluminum alloys are especially preferred. The surface of these materials may be oxidized. Moreover, the surface of the collectors may be made rough by a surface treatment. As for the shape of the collectors, they may be in the form of foil, film, sheet, net, and molded articles of punched material, lath, porous body, foamed body, fiber group, nonwoven fabrics, and the like. Thickness thereof is not particularly limited, and those of 1-500 µm are used.

The negative electrode materials used in the present invention may be lithium, lithium alloys, and compounds capable of absorbing and releasing lithium ions, such as alloys, intermetallic compounds, carbons, organic compounds, inorganic compounds, metal complexes and organic high molecular compounds. These may be used each alone or in combination.

As the lithium alloys, mention may be made of Li-Al (U.S. Patent No.4,002,492), Li-Al-Mn, Li-Al-Mg, Li-Al-Sn, Li-Al-In, Li-Al-Cd, Li-Al-Te, Li-Ga (JP-A-60-257072), Li-Cd, Li-In, Li-Pb, Li-Bi, Li-Mg, and the like. The lithium content is preferably not less than 10%.

The alloys and the intermetallic compounds include compounds of transition metals and silicon, compounds of transition metals and tin, and the like. Compounds of nickel and silicon are especially preferred.

Examples of the carbonaceous materials are cokes, pyrolytic carbons, natural graphite, artificial graphite, mesocarbon microbeads, graphitized mesophase spherules, vapor deposited carbons, glassy carbons, carbon fibers (polyacrylonitrile fibers, pitch fibers, cellulose fibers and vapor deposited carbon fibers), amorphous carbons, and carbons prepared by firing organic materials. These may be used each alone or in combination. Among them, preferred are graphite materials such as those obtained by graphitizing mesophase spherules, natural graphite and artificial graphite. The carbonaceous materials may contain different compounds such as O, B, P, N, S, SiC and B₄C in addition to carbon. The content is preferably 0-10% by weight.

The inorganic compounds include, for example, tin compounds and silicon compounds, and inorganic oxides include, for example, titanium oxides, tungsten oxides, molybdenum oxides, niobium oxides, vanadium oxides and iron oxides. Furthermore, inorganic chalcogenides include, for example, iron sulfide, molybdenum sulfide and titanium sulfide. As the organic high molecular compounds, there may be used polythiophene, polyacetylene, and the like, and as nitrides, there may be used cobalt nitrides, copper nitrides, nickel nitrides, iron nitrides, manganese nitrides, and the like.

These negative electrode materials may also be used as composites, and, for example, there may be considered combinations of carbon and alloy, carbon and inorganic compound, and the like.

Average particle size of the carbon materials used in the present invention is preferably 0.1-60 µm, more preferably 0.5-30 µm. Specific surface area is preferably 1-10 m²/g. Furthermore, from the point of crystal structure, a graphite which has a carbon hexagonal plane spacing (d002) of 3.35-3.40 Å and a size of crystallites in the direction of axis c (LC) of not less than 100Å is preferred.

In the present invention, since Li is contained in the positive electrode active material, a negative electrode material containing no Li (such as carbon) can be used. Moreover, when Li is added to such negative electrode material containing no Li in a small amount (about 0.01-10 parts by weight based on 100 parts by weight of the negative electrode material), even if the material becomes inactive owing to the reaction of a part of Li with electrolyte, Li can be supplemented with Li contained in the negative electrode material and this is preferred. Li can be contained in the negative electrode material, for example, in the following manner. That is, lithium metal which is molten by heating is coated on a collector to which a negative electrode material is pressed, thereby impregnating the negative electrode material with Li, or lithium metal is previously applied to electrode group by press bonding and Li is electrochemically doped in the negative electrode material in the electrolyte.

The conducting agents in the negative electrode mix can be any electron conductive materials which do not undergo chemical changes in the constructed batteries like the conducting agents in the positive electrode mix. Furthermore, in the case of using carbonaceous materials as the negative electrode materials, the carbonaceous materials per se have electron conductivity and, hence, the conducting agents may be or may not be contained.

The binders in the negative electrode mix may be either thermoplastic resins or thermosetting resins, and preferred are polymers having a decomposition temperature of not lower than 300°C. Examples of the binders are polyethylene, polypropylene, polytetrafluoroethylene (PTFE), polyvinylidene fluoride (PVDF), styrene-butadiene rubber, tetrafluoroethylenehexafluoropropylene copolymer (FEP), tetrafluoroethylene-perfluoroalkylvinyl ether copolymer (PFA), vinylidene fluoride-hexafluoropropylene copolymer, vinylidene fluoride-chlorotrifluoroethylene copolymer, ethylene-tetrafluoroethylene copolymer (ETFE resin), polychlorotrifluoroethylene (PCTFE), vinylidene fluoride-pentafluoropropylene copolymer, propylenetetrafluoroethylene copolymer, ethylenechlorotrifluoroethylene copolymer (ECTFE), vinylidene fluoride-hexafluoropropylene-tetrafluoroethylene copolymer, and vinylidene fluoride-perfluoromethylvinyl ether-tetrafluoroethylene copolymer. More preferred are styrene-butadiene rubber and polyvinylidene fluoride. Of these binders, styrene-butadiene rubber is most preferred.

As current collectors of negative electrodes, there may be used any electron conductors as far as they do not undergo chemical changes in the constructed batteries. For examples, as materials of the collectors, there may be used stainless steel, nickel, copper, titanium and carbon, and, besides, copper or stainless steel the surface of which is treated with carbon, nickel, titanium or silver, and, further, Al-Cd alloys. Copper or copper alloys are especially preferred. The surface of these materials may be oxidized. Moreover, the surface of the collectors may be made rough by a surface treatment. As for the shape of the collectors, they may be in the form of foil, film, sheet, net, and molded articles of punched material, lath, porous body, foamed body, fiber group, nonwoven fabrics, and the like. Thickness is not particularly limited, and those of 1-500 µm are used.

The electrode mixes can contain various additives such as fillers, dispersing agents, ion conducting agents, pressure-increasing agents and others in addition to the conducting agents and the binders. The fillers can be any fibrous materials which do not undergo chemical changes in the constructed batteries. Generally, fibers of olefinic polymers such as polypropylene and polyethylene, glass and carbon are used. Amount of the fillers is not especially limited, but is preferably 0-30% by weight.

In addition to the mix layer containing positive electrode active material and negative electrode material, the positive electrode and the negative electrode used in the present invention may further have an undercoat layer provided for the purpose of improving adhesion between the collector and the mix layer, conductivity, cycle characteristics and charge and discharge efficiency or a protective layer provided for the purpose of mechanical protection or chemical protection of the mix layer. This undercoat layer or protective layer can contain binders, particles of conducting agent, particles having no conductivity, and the like.

The non-aqueous electrolyte in the present invention comprises a non-aqueous solvent containing at least one non-cyclic ester and a lithium salt soluble in the solvent.

As the non-cyclic esters, mention may be made of non-cyclic carbonates such as dimethyl carbonate (DMC), diethyl carbonate (DEC), ethylmethyl carbonate (EMC), and dipropyl carbonate (DPC) and aliphatic carboxylic acid esters such as methyl formate, methyl acetate, methyl propionate and ethyl propionate. Among them, preferred are non-cyclic carbonates such as dimethyl carbonate, diethyl carbonate and ethylmethyl carbonate.

The non-aqueous solvents may further contain cyclic carbonates such as ethylene carbonate (EC), propylene carbonate (PC), butylene carbonate (BC) and vinylene carbonate (VC), γ-lactones such as γ-butyrolactone, non-cyclic ethers such as 1,2-dimethoxyethane (DME), 1,2-diethoxyethane (DEE) and ethoxymethoxyethane (EME), cyclic ethers such as tetrahydrofuran and 2-methyltetrahydrofuran, and non-protonic organic solvents such as dimethyl sulfoxide, 1,3-dioxolan, formamide, acetamide, dimethylformamide, dioxolan, acetonitrile, propylnitrile, nitromethane, ethyl monoglyme, phosphoric acid triesters, trimethoxymethane, dioxolan derivatives, sulfolane, methylsulfolane, 1,3-dimethyl-2-imidazolidinone, 3-methyl-2-oxazolidinone, propylene carbonate derivatives, tetrahydrofuran derivatives, ethyl ether, 1,3-propanesultone, anisole, dimethyl sulfoxide, and N-methylpyrrolidone. These may be used each alone or in admixture of two or more. Among them, it is preferred to use a mixed system of cyclic carbonate and non-cyclic carbonate or a mixed system of cyclic carbonate, non-cyclic carbonate and aliphatic carboxylic acid ester as a main component.

The lithium salts which dissolve in these solvents include, for example, LiClO₄, LiBF₄, LiPF₆, LiAlCl₄, LiSbF₆, LiSCN, LiCl, LiCF₃SO₃, LiCF₃CO₂, Li(CF₃SO₂)₂, LiAsF₆, LiN(CF₃SO₂)₂, LiB₁₀Cl₁₀ (JP-A-57-74974), lithium salts of lower aliphatic carboxylic acids (JP-A-60-41733), LiCl, LiBr, LiI (JP-A-60-247265), chloroborane lithium (JP-A-61-165957), lithium tetraphenylborate (JP-A-61-214376), and the like. These may be contained each alone or in combination of two or more in the electrolyte and the like. Among them, it is especially preferred to contain LiPF₆.

Especially preferable electrolyte in the present invention is one which contains at least ethylene carbonate and ethylmethyl carbonate and LiPF₆ as a lithium salt. Amount of the electrolyte contained in the battery is not particularly limited, and it can be used in a necessary amount depending on the amount of positive electrode active material and that of negative electrode material and the size of the battery. Amount of the lithium salt dissolved in the non-aqueous solvent is not particularly limited, but is preferably 0.2-2 mols/l, especially preferably 0.5-1.5 mol/l.

Moreover, if necessary, known additives may further be added to the electrolyte as far as they do not damage the effects of the present invention. The electrolyte is ordinarily used by impregnating or filling a separator such as of porous polymer, glass filter or nonwoven fabric with the electrolyte.

Furthermore, in order to make the electrolyte nonflammable, halogen-containing solvents such as carbon tetrachloride and ethylene trifluorochloride can be contained in the electrolyte. Moreover, carbon dioxide can be contained in the electrolyte for giving suitability for high-temperature storage.

Moreover, there may be used a gelled electrolyte comprising an organic solid electrolyte which contains the above non-aqueous electrolyte. As the organic solid electrolyte, effective are polymeric matrix materials such as polyethylene oxide, polypropylene oxide, polyphosphazene, polyaziridine, polyethylene sulfide, polyvinyl alcohol, polyvinylidene fluoride and polyhexafluoropropylene, and derivatives, mixtures and composites thereof. Especially preferred are copolymers of vinylidene fluoride and hexafluoropropylene and mixtures of polyvinylidene fluoride and polyethylene oxide.

As the separator, an insulating microporous thin film having a high ion permeability and a desired mechanical strength is used. The separator preferably has a function of closing the pores at a temperature of not lower than 80°C to enhance the resistance. Sheets or nonwoven fabrics made from olefin polymers comprising one or combination of polypropylene and polyethylene or glass fibers are used from the points of organic solvent resistance and hydrophobic properties. Pore diameter of the separator is preferably in such a range that active materials, binders and conducting agents which are released from the electrode sheets do not permeate through the pores, and, for example, the pore diameter is preferably 0.01-1 µm. Thickness of the separator is generally 10-300 µm. The porosity is determined depending on permeability to electron or ion, kind of materials or film thickness, and is generally 30-80%.

Shape of batteries can be any of coin type, button type, sheet type, cylinder type, flat type and rectangular type. When the shape of batteries is coin type or button type, the mix of positive electrode active material or negative electrode material is used mainly by compressing into a shape of pellet. Thickness and diameter of the pellet are determined depending on the size of batteries. When the shape of batteries is sheet type, cylinder type or rectangular type, the mix of positive electrode active material or negative electrode material is used mainly by coating on a collector, then drying and compressing the collector. For coating, general coating methods can be employed. For example, there may be employed reverse-roll coating method, direct roll coating method, blade coating method, knife coating method, extrusion coating method, curtain coating method, gravure coating method, bar coating method, casting method, dip coating method, and squeeze coating method. Among them, blade coating method, knife coating method and extrusion coating method are preferred. The coating is preferably carried out at a speed of 0.1-100 m/min. In this case, a satisfactory surface state of the coat layer can be obtained by selecting the coating method in conformity with solution property and drying property of the mix. The coating may be carried out sequentially on each side or simultaneously on both sides. Furthermore, it is preferred to provide the coat layers on both sides of the collector, and the coating layer on one side may comprise a plurality of layers including the mix layer. The mix layer contains a binder, a conducting material and the like in addition to materials which participate in intercalation and deintercalation of lithium ions, such as positive electrode active material and negative electrode material. In addition to the mix layer, there may be provided a protective layer containing no active material, an undercoat layer provided on the collector, an intermediate layer provided between the mix layers, and the like. It is preferred that these layers which contain no active material contain conductive particles, insulation particles, binder, and the like.

The coating may be continuous coating, intermittent coating or stripe coating. Thickness, length or width of the coat layer is determined depending on the size of battery, and thickness of the coat layer on one side is especially preferably 1-2000 µm in the compressed state after drying.

For drying or dehydration of pellets or sheets, generally employed methods can be utilized. It is especially preferred to use hot air, vacuum, infrared rays, far infrared rays, electron rays and low-humidity air each alone or in combination. The temperature is preferably in the range of 80-350°C, especially preferably in the range of 100-250°C. Water content is preferably not more than 2000 ppm in the whole battery, and preferably not more than 500 ppm in the positive electrode mix, the negative electrode mix and the electrolyte from the point of cycle characteristics. The pressing method of the sheet can be generally employed methods, and especially preferred are mold pressing method and calender pressing method. The pressing pressure is not particularly limited, but preferably is 0.2-3 t/cm². The pressing speed of calender pressing method is preferably 0.1-50 m/min. The pressing temperature is preferably from room temperature to 200°C. Ratio of width of positive electrode sheet to that of negative electrode sheet is preferably 0.9-1.1, especially preferably 0.95-1.0. Ratio of content of the positive electrode active material and the negative electrode material cannot be limited because it varies depending on the kind of compounds and the formulation of the mix, but can be limited to optimum value from the viewpoints of capacity, cycle characteristics and safety.

The shape of the rolled electrodes in the present invention is not necessarily in the form of true cylinder, and may be in the form of ellipsoidal cylinder having a ellipsoidal section or in the form of square pillar such as rectangle.

Preferred combinations in the present invention are combinations of the preferred chemical materials and the preferred battery constituting parts as mentioned above. Examples of preferred combinations are as follows. LiₓCoO₂, LiₓNiO₂, LiₓMn₂O₄ (0≦X≦1) are contained as positive electrode active materials, and acetylene black is contained together as a conducting agent. The current collector of positive electrode is made of stainless steel or aluminum, and is in the form of net, sheet, foil or lath. The negative electrode material preferably does not contain lithium metal alone, but contains at least one compound such as alloy and carbonaceous material. The current collector of negative electrode is made of stainless steel or copper and is in the form of net, sheet, foil or lath. Carbon materials such as acetylene black and graphite as electron conducting agent may be contained in the mix used together with positive electrode active materials or negative electrode materials. As the binders, there may be used fluorine-containing thermoplastic compounds such as polyvinylidene fluoride and polytetrafluoroethylene, polymers containing acrylic acid, and elastomers such as styrene-butadiene rubber and ethylene-propylene terpolymer each alone or in admixture. The electrolyte preferably contains cyclic or non-cyclic carbonates such as ethylene carbonate, diethyl carbonate, dimethyl carbonate and ethylmethyl carbonate or additionally aliphatic carboxylic acid esters such as methyl acetate and methyl propionate, and LiPF₆ as a lithium salt. The separator preferably comprises polypropylene or polyethylene each alone or in combination. The battery may have any shapes such as cylindrical shape, flat shape, thin shape and rectangular shape. The battery preferably has a means for ensuring safety against errors in working (e.g., internal pressure releasing type safety valve, current interrupting type safety valve, separator which enhances resistance at high temperatures).

### Examples

Examples of the present invention will be explained below referring to the drawings.

### Example 1

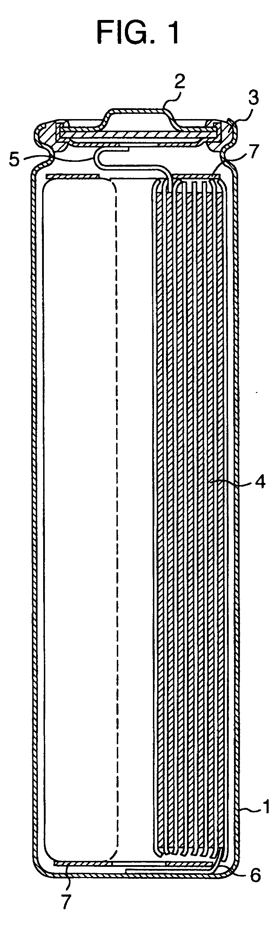

FIG. 1 is a longitudinal sectional view of a cylindrical battery used in this example. In FIG. 1, the reference numeral 1 indicates a battery case made by processing a stainless steel plate having resistance to organic electrolyte, 2 indicates a sealing plate provided with a safety valve, 3 indicates an insulation packing, 4 indicates an electrode plate group, and a positive electrode and a negative electrode between which a separator is interposed are rolled a plurality of times into a spiral form and inserted in the case 1. A positive electrode lead 5 is drawn from the positive electrode and connected to the sealing plate 2, and a negative electrode lead 6 is drawn from the negative electrode and connected to the bottom of the battery case 1. The reference numeral 7 indicates an insulation ring, which is provided at the upper and lower portions of the electrode plate group 4. The positive electrode, the negative electrode, and others will be explained in detail below.

The positive electrode was made in the following manner. Li₂CO₃ and Co₃O₄ were mixed and fired at 900°C for 10 hours to prepare an LiCoO₂ powder. This powder was mixed with 3% of acetylene black and 7% of a fluorocarbon polymer binder based on the weight of the LiCoO₂ powder, followed by suspending the mixture in an aqueous carboxymethyl cellulose solution to prepare a positive electrode mix paste. The resulting positive electrode mix paste was coated on an aluminum foil of 30 µm in thickness and dried, followed by rolling to make a positive electrode plate of 0.18 mm in thickness, 37 mm in width and 390 mm in length.

For the negative electrode, a mesophase spherule which was graphitized at a high temperature of 2800°C (hereinafter referred to as "mesophase graphite") was used. This mesophase graphite was mixed with 5% of a styrene-butadiene rubber based on the weight of the mesophase graphite, and then the mixture was suspended in an aqueous carboxymethyl cellulose solution to prepare a paste. This negative electrode mix paste was coated on both sides of a Cu foil of 0.02 mm in thickness and dried, followed by rolling to make a negative electrode plate of 0.20 mm in thickness, 39 mm in width and 420 mm in length.

A lead made of aluminum was attached to the positive electrode plate and a lead made of nickel was attached to the negative electrode plate, and the positive electrode plate and the negative electrode plate with a polypropylene separator of 0.025 mm in thickness, 45 mm in width and 950 mm in length interposed between the positive electrode plate and the negative electrode plate were rolled into a spiral form and inserted in a battery case of 17.0 mm in diameter and 50.0 mm in height. The electrolyte used was one prepared by dissolving 1 mol/liter of LiPF₆ in a mixed solvent comprising EC, DEC and MP at a volume ratio of 30:50:20, and as additives to the electrolyte, each of hexaphenylbenzene, p-terphenyl, 1-phenylpiperazine, 1,2,3,4-tetrahydoisoquinoline, phenylcyclohexane, 1,3,5-triphenylbenzene, dodecahydrotriphenylene, and divinylbenzene which were the organic compounds of the formula (1) was added in an amount of 2% by weight based on the total weight of the organic solvent and the additive. The electrolyte was poured into the battery case, and then the case was sealed to make batteries 1-9 of the present invention.

### Example 2

Cylindrical batteries of spiral type were made in the same manner as in Example 1, except that t-butylvinyl ether, methyl methacrylate monomer, vinylcyclohexane, and 2,3-dimethyl-1,3-butadiene which were the organic compounds of the formula (2) were used as the additives to the electrolyte. The thus obtained batteries were referred to as batteries 10-14 of the present invention.

### Example 3

Cylindrical batteries of spiral type were made in the same manner as in Example 1, except that tribenzylamine and N-phenyl-dibenzylamine which were the organic compounds of the formula (3) were used as the additives to the electrolyte. The thus obtained batteries were referred to as batteries 15 and 16 of the present invention.

### Example 4

Cylindrical batteries of spiral type were made in the same manner as in Example 1, except that squalene and (E)-β-farnesene which were the organic compounds corresponding to the unsaturated chain organic compounds having 1-10 double bonds and 10-30 carbon atoms in the straight chain portion were used as the additives to the electrolyte. The thus obtained batteries were referred to as batteries 15 and 16 of the present invention.

### Example 5

Cylindrical batteries of spiral type were made in the same manner as in Example 1, except that tris(4-methoxyphenyl)phosphine, (1R)-(+)-α-pinene, dicyclopentadiene, di(ethylene glycol)divinyl ether, 9,10-dihydroanthracene, triptycene and [2,2]-p-cyclophane were used as the additives to the electrolyte. The thus obtained batteries were referred to as batteries 19-25 of the present invention.

### Comparative Example 1

A comparative cylindrical battery of spiral type in which the additive to the electrolyte was not added was made in the same manner as in Example 1. The thus obtained battery was referred to as comparative battery (battery 26).

### Comparative Example 2

Cylindrical batteries of spiral type were made in the same manner as in Example 1, except that biphenyl, thiophene and 3-chlorothiophene were used as the additives to the electrolyte. The thus obtained batteries were referred to as comparative batteries (batteries 27-29).

Then, five cells each of the batteries 1-25 of the present invention and the comparative batteries 26-29 were subjected to constant voltage charging at a limit current of 500 mA and a charging voltage of 4.2 V for a charging time of 2 hours at an environmental temperature of 20°C, and discharge characteristics of these batteries at 1A were examined in the charging state. Thereafter, these batteries were stored in the charging state in a thermostat chamber at 80°C for 5 days, and the batteries after stored were also subjected to charging and discharging under the same conditions as above, and capacity recovery rate after storing (capacity after storing/capacity before storing × 100(%)) was obtained. The results are shown in Tables 1-6.

Furthermore, 20 cells each of the batteries were subjected to overcharging at 1A from the charging state and it was confirmed whether abnormal heat generation occurred or not. The number of cells among 20 cells in which abnormal heat generation occurred is shown in Tables 1-6.

**Table 1**

| (Example 1) | | | | | |
|---|---|---|---|---|---|
| No. | Additives | HOMO | LUMO | Recovery rate after storing | Overcharging test |
| 1 | Hexaphenylbenzene | -9.442 | 0.0813 | 91.2 | 0/20 |
| 2 | p-Terphenyl | -9.3829 | 0.0474 | 93.7 | 0/20 |
| 3 | 1-Phenylpiperazine | -8.8402 | 0.3045 | 94.8 | 0/20 |
| 4 | 1,2,3,4-Tetrahydroisoquinoline | -9.1063 | 0.3747 | 92.8 | 0/20 |
| 5 | Phenylcyclohexane | -9.4288 | 0.3961 | 92.3 | 0/20 |
| 6 | 1,3,5-Triphenylbenzene | -9.5698 | 0.1704 | 93.7 | 0/20 |
| 7 | Dodecahydrotriphenylene | -8.8282 | 0.5063 | 91.4 | 0/20 |
| 8 | Divinylbenzene | -9.0738 | -0.1222 | 91.7 | 0/20 |
| 9 | 1,4-Dicyclohexylbenzene | -9.2999 | 0.3508 | 91.7 | 0/20 |

**Table 2**

| (Example 2) | | | | | |
|---|---|---|---|---|---|
| No. | Additives | HOMO | LUMO | Recovery rate after storing | Overcharging test |
| 10 | t-Butylvinyl ether | -9.3128 | 1.4402 | 93.5 | 0/20 |
| 11 | Methyl methacrylate monomer | -10.56 | 0.4128 | 91.5 | 0/20 |
| 12 | Vinylcyclohexane | -10.124 | 1.1991 | 91.7 | 0/20 |
| 13 | 2,3-Dimethyl-1,3-butadiene | -9.5072 | 0.6255 | 91.5 | 0/20 |
| 14 | Methylenecyclohexane | -9.8256 | 1.1529 | 94.6 | 0/20 |

**Table 3**

| (Example 3) | | | | | |
|---|---|---|---|---|---|
| No. | Additives | HOMO | LUMO | Recovery rate after storing | Overcharging test |
| 15 | Tribenzylamine | -9.0909 | 0.1285 | 94.8 | 0/20 |
| 16 | N-phenyldibenzylamine | -9.2571 | 0.2468 | 92.6 | 0/20 |

**Table 4**

| (Example 4) | | | | | |
|---|---|---|---|---|---|
| No. | Additives | HOMO | LUMO | Recovery rate after storing | Overcharging test |
| 17 | Squalene | -9.2002 | 0.9853 | 93.4 | 0/20 |
| 18 | (E)-β-farnesene | -9.3018 | 0.3382 | 91.5 | 0/20 |

**Table 5**

| (Example 5) | | | | | |
|---|---|---|---|---|---|
| No. | Additives | HOMO | LUMO | Recovery rate after storing | Overcharging test |
| 19 | Tris(4-methoxyphenyl)-phosphine | -8.7072 | 0.1294 | 94.1 | 0/20 |
| 20 | (1R)-(+)-α-pinene | -9.6117 | 1.1448 | 94.3 | 0/20 |
| 21 | Dicyclopentadiene | -9.5743 | 0.9682 | 93.2 | 0/20 |
| 22 | Di-(ethyleneglycol)-divinylether | -9.5991 | 1.1676 | 92.5 | 0/20 |
| 23 | 9,10-Dihydroanthracene | -9.171 | 0.3121 | 91.7 | 0/20 |
| 24 | Triptycene | -9.2378 | 0.1824 | 93.9 | 0/20 |
| 25 | [2,2]-p-cyclophane | -8.9716 | 0.2534 | 91.1 | 0/20 |

**Table 6**

| (Comparative Example 1 and 2) | | | | | |
|---|---|---|---|---|---|
| No. | Additives | HOMO | LUMO | Recovery rate after storing | Overcharging test |
| 26 | NO | | | 93.9 | 8/20 |
| 27 | Biphenyl | -9.1449 | -0.1419 | 78.4 | 0/20 |
| 28 | Thiophene | -9.5429 | -0.1917 | 72.3 | 0/20 |
| 29 | 3-Chlorothiophene | -9.2515 | -0.4247 | 69.6 | 0/20 |

As shown in Table 6, in the case of the battery 26 in which the additives were not added, abnormal heat generation occurred in 8 cells among 20 cells when subjected to overcharging. Hitherto, the safety of batteries has been ensured by providing a plurality of safety mechanisms comprising a protective circuit for charging voltage and a current interrupting mechanism, but the abnormal heat generation may occur in case no safety protection was provided as in the Comparative Example 1.

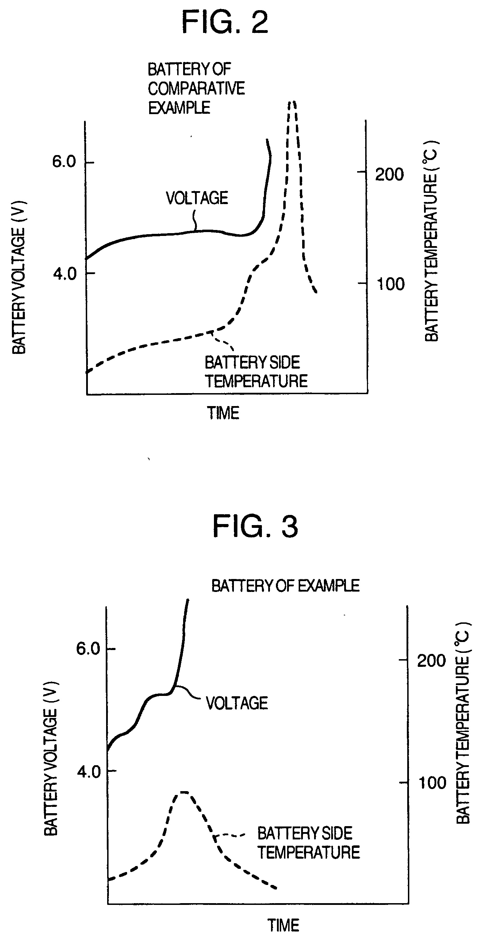

FIG. 2 shows the results of measurement of voltage and battery side temperature in Comparative Example 1 (battery 26) when subjected to overcharging.

It can be seen that by carrying out the overcharging, first, lithium in the positive electrode was extracted, then there were caused increase of electronic resistance of positive electrode, increase of liquid resistance due to oxidative decomposition of the electrolyte, and increase of battery temperature due to exhaustion of liquid, and, thus, since heat stability already lowered at the melting temperature of the separator, the abnormal heat generation occurred.

On the other hand, as shown in Tables 1-5, in the batteries 1-25 in which the additives of the present invention were added to the electrolyte, no abnormal heat generation occurred even when they were subjected to overcharging test. FIG. 3 shows overcharging behavior of the battery in which hexaphenylbenzene was added to the electrolyte in Example 1 as a representative example.

It can be seen that in the above example the battery voltage markedly increased just after starting of overcharging, and polarization characteristics of the battery were deteriorated. The battery temperature also rose early, and flow of the current stopped at the melting temperature of the separator, and as a result, the battery temperature safely lowered without causing abnormal heat generation.

This is because an oxidation polymerized film of high resistance is formed on the surface of the positive electrode by oxidation polymerization of the additive preferentially to the extraction of lithium in the positive electrode at the time of overcharging, and due to the increase of polarization, decomposition of the electrolyte proceeds dominantly, whereby flow of current is stopped in the battery owing to exhaustion of the electrolyte or shutdown of the separator before heat stability of the positive electrode lowers.

Naturally, reliability of battery charging system can be improved by providing a positive temperature coefficient thermistor (PTC) or a temperature fuse as a function of breaking a charging circuit upon sensing the rise of battery temperature. The working temperature of the positive temperature coefficient thermistor (PTC) and the temperature fuse is desirably in the range of 60-120°C because it is essential that the positive electrode active material works at a thermally stable temperature and does not work at usual environmental temperatures of battery devices.

Moreover, since the additives used in the Examples were superior in reduction resistance in the negative electrode, they were superior in storage characteristics at high temperatures as compared with the conventional additives used in Comparative Example 2.

As mentioned above, it has been found that batteries which are safe even at the time of overcharging, good in high-temperature storage characteristics and very high in reliability can be realized by using the additives of the present invention.

As a result of investigation on concentration of the additives, an improvement of safety was recognized at 0.1% by weight or more. When the amount was more than 20% by weight, discharge characteristics of batteries began to deteriorate. It is considered that this is because the electric conductivity of the electrolyte per se decreased.

From the above, amount of the additives to the electrolyte is preferably in the range of 0.1-20% by weight.

The present invention is not limited to these Examples.

### Industrial Applicability

As explained above, the present invention is a non-aqueous electrolyte secondary battery, characterized in that an additive having a HOMO energy of -8.5 eV to -11.0 eV and a LUMO energy of -0.135 eV to 3.5 eV is added to the electrolyte in an amount of 0.1-20% by weight based on the total amount of the solvent and the additive. Batteries which are safe even at the time of overcharging, excellent in storage characteristics and very high in reliability can be realized by adding the additives of the present invention. The reliability of these batteries is further improved by using a microporous polyolefin film as the separator.

Moreover, non-aqueous electrolyte secondary batteries of higher reliability can be provided by mounting a charging control means which breaks the charging circuit upon detecting the rise of battery temperature.

Portable telephones, portable information terminal devices, cam coders, personal computers, PDA, portable audio devices, electric cars, electric sources for road leveling, and the like which are high in safety and excellent in long-term life characteristics can be provided by using the non-aqueous electrolyte secondary batteries of the present invention.

## Claims

1. A non-aqueous electrolyte secondary battery which comprises a positive electrode containing a lithium-containing composite oxide; a negative electrode containing a material capable of absorbing and releasing lithium; and a non-aqueous electrolyte containing a non-aqueous solvent and at least one organic compound, where the organic compound has a HOMO energy (highest occupied molecular orbital energy) of -8.5 eV to -11.0 eV and a LUMO energy (lowest unoccupied molecular orbital energy) of -0.135 eV to 3.5 eV which are calculated using PM3 method for Hamiltonian in semiempirical molecular orbital calculation method, and the total amount of the organic compound is in the range of 0.1-20% by weight based on the total amount of the non-aqueous solvent and the organic compound.

2. A non-aqueous electrolyte secondary battery according to claim 1, wherein the organic compound is an aromatic compound represented by the formula (1): 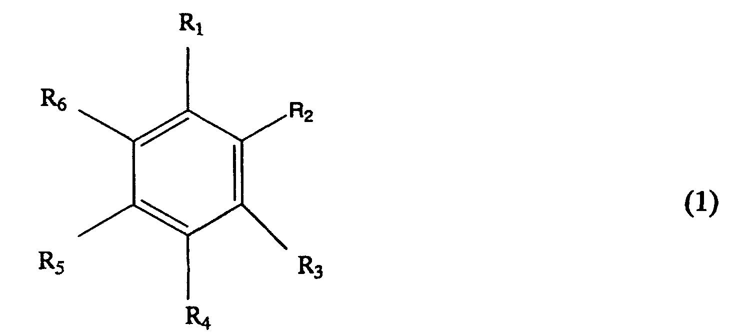 (in the formula, R1-R6 independently of one another are groups selected from the group consisting of hydrogen atom, alkyl group, aryl group and amino group, with a proviso that the number of the hydrogen atom is not more than 5, and the adjacent two alkyl groups may form a 5-membered or 6-membered ring).

3. A non-aqueous electrolyte secondary battery according to claim 2, wherein the compound represented by the formula (1) is an aromatic compound selected from the group consisting of hexaphenylbenzene, p-terphenyl, 1-phenylpiperazine, 1,2,3,4-tetrahydroisoquinoline, phenylcyclohexane, 1,3,5-triphenylbenzene, dodecahydrotriphenylene, divinylbenzene and 1,4-dicyclohexylbenzene.

4. A non-aqueous electrolyte secondary battery according to claim 1, wherein the organic compound is a compound represented by the formula (2): 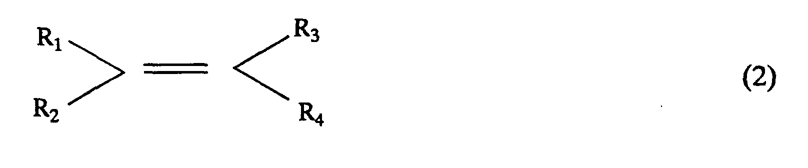 (in the above formula, R1-R4 independently of one another are hydrogen atom, alkyl group, alkoxy group, aryl group or oxycarbonyl group represented by R5OCO-, and the adjacent two alkyl groups of R1 and R2; R3 and R4 may form a 5-membered or 6-membered ring).

5. A non-aqueous electrolyte secondary battery according to claim 4, wherein the compound represented by the formula (2) is a compound selected from the group consisting of t-butylvinyl ether, methyl methacrylate monomer, vinylcyclohexanone, 2,3-dimethyl-1,3-butadiene and methylenecyclohexanone.

6. A non-aqueous electrolyte secondary battery according to claim 1, wherein the organic compound is a compound represented by the formula (3): 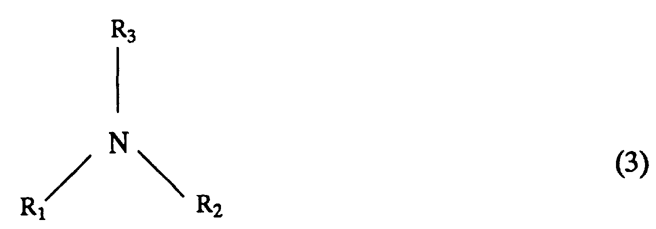 (in the formula, R1-R3 independently of one another are alkyl group or aryl group).

7. A non-aqueous electrolyte secondary battery according to claim 6, wherein the compound represented by the formula (3) is a compound selected from the group consisting of tribenzylamine and N-phenyldibenzylamine.

8. A non-aqueous electrolyte secondary battery according to claim 1, wherein the organic compound is an unsaturated chain organic compound which has 1-10 double bonds and in which the carbon number of straight chain portion is 10-30.

9. A non-aqueous electrolyte secondary battery according to claim 8, wherein the unsaturated chain organic compound is squalene or (E)-β-farnesene.

10. A non-aqueous electrolyte secondary battery according to claim 1, wherein the organic compound is an organic compound selected from the group consisting of tris(4-methoxyphenyl)phosphine, (1R)-(+)-α-pinene, dicyclopentadiene, di(ethylene glycol)divinyl ether, 9,10-dihydroanthracene, triptycene and [2,2]-p-cyclophane.

11. A non-aqueous electrolyte secondary battery according to claims 1-10, wherein the non-aqueous electrolyte contains the organic compound mentioned in any one of claims 1-10, and the positive electrode and the negative electrode are opposed to each other with interposing therebetween an insulating microporous polyolefin film capable of being impregnated with electrolyte and holding it or an electrolyte essentially consisting of a non-aqueous electrolyte and a polymer, at least a part of which is gelled.

12. A non-aqueous electrolyte secondary battery according to claims 1-11 which has a charging control means of breaking a charging circuit upon detecting the rising of battery temperature.

13. A non-aqueous electrolyte secondary battery according to claim 12, wherein the means of breaking the charging circuit upon detecting the rising of the battery temperature is a positive temperature coefficient thermistor (PTC) or a temperature fuse.

14. A non-aqueous electrolyte secondary battery according to claim 13, wherein the working temperature of the positive temperature coefficient thermistor (PTC) or the temperature fuse is in the range of 60-120°C.

15. A device selected from the group consisting of portable telephones, portable information terminal devices, cam coders, personal computers, PDA, portable audio devices, electric cars, electric sources for road leveling on which is mounted the non-aqueous electrolyte secondary battery mentioned in any one of claims 1-14.
